# EUROPEAN PATENT APPLICATION

(11) **EP 4 757 060 A1**
(43) Date of publication of application: **10.06.2026**
(21) Application number: 24848971.8
(22) Date of filing: 22.07.2024
(51) Int. Cl.: H01M 50/586, H01M 4/13, H01M 10/052, H01M 10/0587, H01M 50/595

(54) **NONAQUEOUS ELECTROLYTE SECONDARY BATTERY**

(30) Priority: 31.07.2023 JP 2023124037
(71) Applicant: Panasonic Intellectual Property Management Co., Ltd., Kadoma-shi, Osaka 571-0057 (JP)
(72) Inventor: OKUNO, Morihiko, Osaka 571-0057 (JP)
(74) Representative: Eisenführ Speiser
(86) International application number: PCT/JP2024/026082
(87) International publication number: WO 2025/028316

(57) **Abstract**

The present invention provides a nonaqueous electrolyte secondary battery which has a reduced risk of short circuiting. A nonaqueous electrolyte secondary battery according to one embodiment of the present disclosure is provided with: an electrode body that is obtained by winding a first electrode and a second electrode, which are belt-shaped and have different polarities from each other, in the longitudinal direction with a separator being interposed therebetween; and an outer casing in which the electrode body is housed. The first electrode has a current collector and a mixture layer that is formed on the surface of the current collector. The surface of the first electrode is provided with an exposure part in which the current collector is exposed, and a protective tape is affixed so as to cover the exposure part and the mixture layer around the exposure part. The protective tape has a base material layer and an adhesive layer, and ends of the adhesive layer are positioned more inside of the protective tape than ends of the base material layer in the longitudinal direction of the first electrode, and are positioned closer to the ends of the base material layer than ends of the exposure part.

## Description

### TECHNICAL FIELD

The present disclosure relates to a non-aqueous electrolyte secondary battery.

### BACKGROUND ART

Conventionally, a non-aqueous electrolyte secondary battery in which a wound electrode assembly, in which a band-shaped positive electrode and a band-shaped negative electrode are wound via a separator, is housed in an outer case, is widely used. Patent Literature 1 discloses a technique for forming an exposed portion in which a current collector is exposed on each of a positive electrode and a negative electrode, welding a lead to the exposed portion, and covering the lead with a protective tape. Patent Literature 2 discloses a technique for preventing a reaction between the adhesive layer of the protective tape and the mixture layer by preventing the adhesive layer from covering the surface of the mixture layer.

### CITATION LIST

### PATENT LITERATURE

PATENT LITERATURE 1: Japanese Unexamined Patent Application Publication No. 2004-311282
PATENT LITERATURE 2: Japanese Unexamined Patent Application Publication No. 2010-55906

### SUMMARY

The technique disclosed in Patent Literature 2 has a safety issue in that, since the adhesive layer does not cover the surface of the mixture layer, there is a possibility that foreign matter may enter the exposed portion. In addition, studies by the present inventors have revealed that, as a result of repeated expansion and contraction of the electrode assembly during charging and discharging of the battery, peeling or cracking occurs in the mixture layer starting from the end of the adhesive layer of the protective tape, which may lead to a short-circuiting. Since the technique disclosed in Patent Literature 1 does not address the risk of short-circuiting, there is still room for improvement.

It is an advantage of the present disclosure to provide a non-aqueous electrolyte secondary battery with a reduced risk of short-circuiting.

A non-aqueous electrolyte secondary battery of an aspect of the present disclosure comprises an electrode assembly in which a first electrode and a second electrode, each formed in a band shape and having different polarities, are wound in a longitudinal direction via a separator; and an outer case that houses the electrode assembly, wherein the first electrode has a current collector and a mixture layer formed on a surface of the current collector, on the surface of the first electrode, an exposed portion where the current collector is exposed is formed, and a protective tape is affixed to cover the exposed portion and the mixture layer around the exposed portion, the protective tape has a base material layer and an adhesive layer, and in the longitudinal direction of the first electrode, an end of the adhesive layer is positioned more inside the protective tape than an end of the base material layer and is positioned closer to the end side of the base material layer than an end of the exposed portion.

The non-aqueous electrolyte secondary battery according to the present disclosure minimizes a risk of short-circuiting and ensures high safety.

### BRIEF DESCRIPTION OF DRAWING

FIG. 1 is an axial sectional view of a cylindrical secondary battery of an example of an embodiment.
FIG. 2 is a perspective view of a wound electrode assembly comprised in the secondary battery illustrated in FIG. 1.
FIG. 3 is a front view illustrating a positive electrode and a negative electrode that constitute an electrode assembly of an example of an embodiment in a developed state.
FIG. 4 is a sectional view taken along line A-A of FIG. 3.
FIG. 5 is an enlarged view of a periphery of the positive electrode exposed portion of FIG. 3.
FIG. 6 is a view corresponding to FIG. 5 in another example of an embodiment.

### DESCRIPTION OF EMBODIMENTS

Hereinafter, an example of an embodiment of a cylindrical secondary battery according to the present disclosure will be described in detail with reference to the drawings. In the following description, specific shapes, materials, values, directions, and the like, which are examples for facilitating understanding of the present invention, may be appropriately modified with specifications of cylindrical secondary batteries. In the following description, when a plurality of embodiments and modifications are included, it is assumed from the beginning that characteristics portions thereof are used in combination as appropriate.

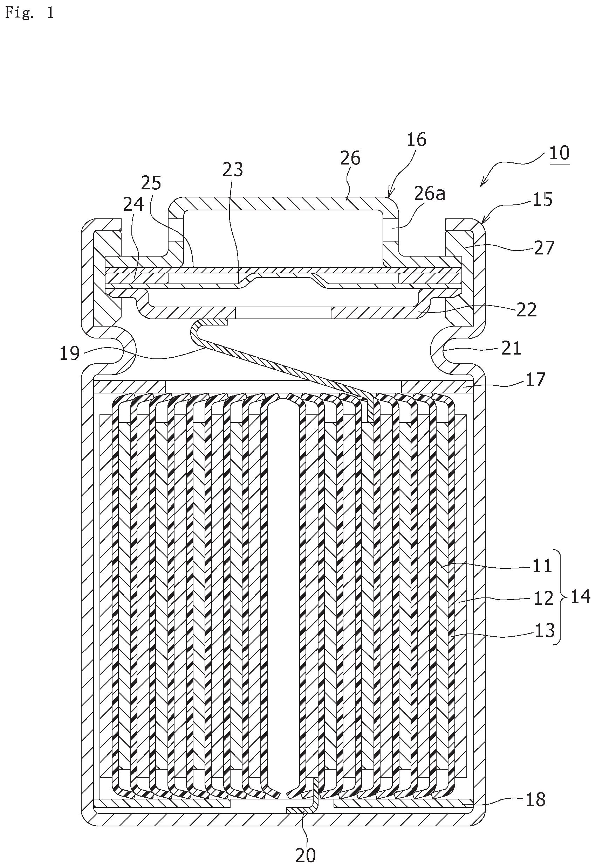

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an outer case 15. The electrode assembly 14 has a wound structure in which a band-shaped positive electrode 11 and a band-shaped negative electrode 12 are wound via a separator 13. As a non-aqueous solvent (organic solvent) of the non-aqueous electrolyte, carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. As an electrolyte salt of the non-aqueous electrolyte, LiPF₆, LiBF₄, LiCF₃SO₃, and the like, and a mixture thereof may be used. The amount of the electrolyte salt dissolved in the non-aqueous solvent is, for example, greater than or equal to 0.5 mol/L and less than or equal to 2.0 mol/L. For convenience of description, a sealing assembly 16 side will be described as the "upper side", and the bottom side of the outer case 15 will be described as the "lower side".

The sealing assembly 16 closes an opening end portion of the outer case 15 to seal an inside of the secondary battery 10. Insulating plates 17 and 18 are provided on the upper and lower sides of the electrode assembly 14, respectively. A positive electrode lead 19, extending through a through hole of the insulating plate 17 toward the upper side, is welded to the lower surface of a filter 22 that is a bottom plate of the sealing assembly 16. In the secondary battery 10, a cap 26, a top plate of the sealing assembly 16 electrically connected to the filter 22, becomes a positive electrode terminal. Meanwhile, a negative electrode lead 20 extends through a through hole of the insulating plate 18 toward the bottom side of the outer case 15, and the negative electrode lead 20 is welded to a bottom inner surface of the outer case 15. In the secondary battery 10, the outer case 15 becomes a negative electrode terminal. Note that when the negative electrode lead 20 is provided at the external winding end, the negative electrode lead 20 extends outside the insulating plate 18 to the bottom side of the outer case 15, and the negative electrode lead 20 is welded to a bottom inner surface of the outer case 15.

The outer case 15 is, for example, a bottomed cylindrical metallic exterior housing can. A gasket 27 is provided between the outer case 15 and the sealing assembly 16 to achieve sealability inside the secondary battery 10. The outer case 15 has a grooved portion 21 that supports the sealing assembly 16, which is formed, for example, by pressing side surface portions from the outside. The grooved portion 21 is preferably annularly formed along the peripheral direction of the outer case 15, supporting the sealing assembly 16 by the upper surface thereof.

The sealing assembly 16 has a filter 22, a lower vent member 23, an insulating member 24, an upper vent member 25, and the cap 26, which are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at respective central parts thereof, and the insulating member 24 is interposed between the respective circumferential parts thereof. If the internal pressure of the battery increases due to abnormal heat generation, for example, the lower vent member 23 breaks, and the upper vent member 25 consequently bulges toward the cap 26 and separates from the lower vent member 23, thereby cutting off the electrical connection between the two members. If the internal pressure further increases, the upper vent member 25 breaks, and gas is discharged through the opening portion 26a of the cap 26.

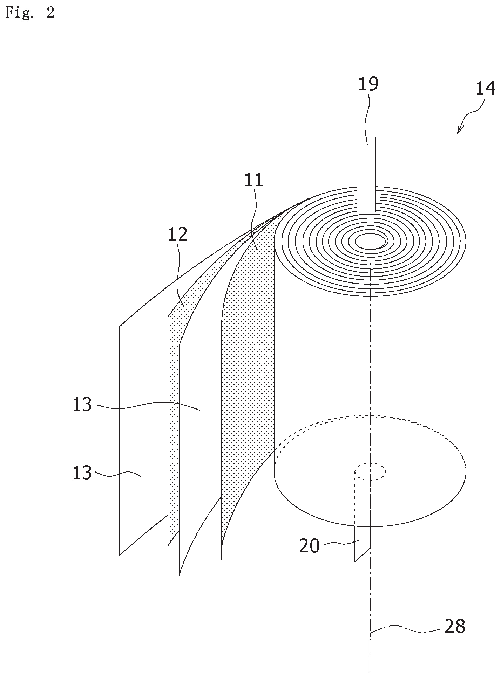

Next, the electrode assembly 14 will be described with reference to FIG. 2. FIG. 2 is a perspective view of the electrode assembly 14. The electrode assembly 14 has a wound structure in which a positive electrode 11 and a negative electrode 12 are spirally wound via a separator 13, as described above. Each of the positive electrode 11, the negative electrode 12, and the separator 13 is formed in a band shape, which is spirally wound around a winding core disposed along the winding axis 28 to be alternately stacked in a radial direction of the electrode assembly 14. In the radial direction, the winding axis 28 side is referred to as the inner circumferential side, and the opposite side is referred to as the outer circumferential side. In the electrode assembly 14, the longitudinal direction of the positive electrode 11 and the negative electrode 12 corresponds to the winding direction, while the transverse direction of the positive electrode 11 and the negative electrode 12 corresponds to the axial direction. The positive electrode lead 19 extends in the axial direction from substantially the center in the radial direction between the center and the outermost circumference at the upper end of the electrode assembly 14. The negative electrode lead 20 extends in the axial direction from the vicinity of the winding axis 28 at the lower end of the electrode assembly 14.

For the separator 13, a porous sheet having an ion permeation property and an insulation property is used. Specific examples of the porous sheet include a microporous thin film, a woven fabric, and a nonwoven fabric. Preferred materials for the separator 13 include olefin-based resins such as polyethylene and polypropylene. The thickness of the separator 13 is, for example, greater than or equal to 10 µm and less than or equal to 50 µm.

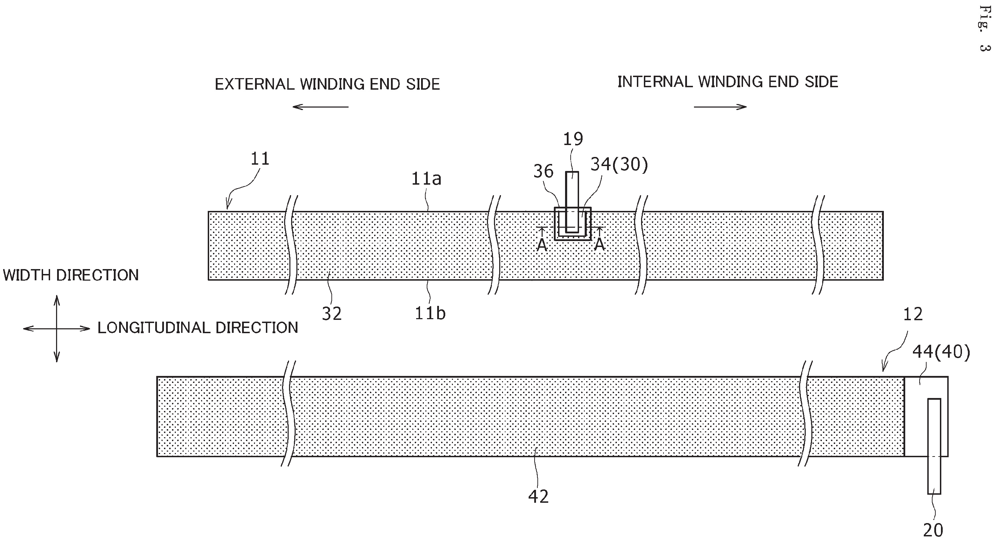

Next, the positive electrode 11 and the negative electrode 12 of the secondary battery 10 will be described in detail with reference to FIGS. 3 to 6. Hereinafter, an example will be described in which the positive electrode 11 is the first electrode and the negative electrode 12 is the second electrode. Note that the present embodiment is not limited to this example. For example, the negative electrode 12 may be the first electrode. In addition, the second electrode may have the same characteristics as the first electrode, and both the positive electrode 11 and the negative electrode 12 may have the characteristics of the first electrode.

FIG. 3 is a front view illustrating the positive electrode and the negative electrode that constitute the electrode assembly of an example of an embodiment in a developed state. As illustrated in FIG. 3, in general, the negative electrode 12 is formed to be one size larger than the positive electrode 11 to prevent precipitation of lithium. That is, the negative electrode 12 is formed to be longer than the positive electrode 11 in a longitudinal direction and a width direction.

The positive electrode 11 has a positive electrode current collector 30 and a positive electrode mixture layer 32 formed on the surface of the positive electrode current collector 30. For the positive electrode current collector 30, a foil of a metal stable within a potential range of the positive electrode, such as aluminum, a film in which such a metal is disposed on a surface layer thereof, and the like may be used.

The positive electrode mixture layer 32 includes, for example, a positive electrode active material, a conductive agent, and a binder. The content of the positive electrode active material in the positive electrode mixture layer 32 is, for example, greater than or equal to 85 mass% and less than or equal to 99 mass% relative to the total mass of the positive electrode mixture layer. The positive electrode can be produced by, for example, applying a positive electrode mixture slurry including the positive electrode active material, the conductive agent, the binder, and the like on both the surfaces of the positive electrode current collector 30, drying the coating film, and then rolling the coating film by using a roller or the like. The positive electrode mixture layer 32 is preferably formed on both the surfaces of the positive electrode current collector 30.

Examples of the positive electrode active material included in the positive electrode mixture layer 32 include a lithium-transition metal composite oxide containing a transition metal element, such as Co, Mn, or Ni. The lithium-transition metal composite oxide is, for example, LiₓCoO₂, LiₓNiO₂, LiₓMnO₂, LiₓCo_{y}Ni_{1-y}O₂, LiₓCo_{y}Mi_{1-y}O_{z}, LiₓNi_{1-y}M_{y}O₂, LiₓMn₂O₄, LiₓMn_{2-y}M_{y}O₄, LiMPO₄, or Li₂MPO₄F (M is at least one of the group consisting of Na, Mg, Sc, Y, Mn, Fe, Co, Ni, Cu, Zn, Al, Cr, Pb, Sb, and B, where 0 < x ≤ 1.2, 0 < y ≤ 0.9, 2.0 ≤ z ≤ 2.3). These may be used alone, or a plurality of types thereof may be mixed for use.

The positive electrode active material preferably includes lithium-nickel composite oxide in terms of its ability to increase the capacity of the secondary battery 10. Examples of the lithium-nickel composite oxide include LiₓNiO₂, LiₓCo_{y}Ni_{1-y}O₂, and LiₓNi_{1-y}M_{y}O_{z} (M is at least one of the group consisting of Na, Mg, Sc, Y, Mn, Fe, Co, Ni, Cu, Zn, Al, Cr, Pb, Sb, and B, where 0 < x ≤ 1.2, 0 < y ≤ 0.9, 2.0 ≤ z ≤ 2.3). The higher the Ni content in the lithium-nickel composite oxide, the higher the capacity.

Examples of the conductive agent included in the positive electrode mixture layer 32 include carbon black such as acetylene black or Ketjenblack, graphite, carbon nanotubes (CNT), carbon nanofibers, graphene, metal fibers, metal powder, and conductive whiskers. These may be used alone or may be used in combination with two or more thereof.

Examples of the binder included in the positive electrode mixture layer 32 include a fluororesin such as polytetrafluoroethylene (PTFE) and polyvinylidene fluoride (PVDF), polyacrylonitrile (PAN), a polyimide resin, an acrylic resin, and a polyolefin resin. These may be used alone or may be used in combination with two or more thereof.

On the surface of the positive electrode 11, a positive electrode exposed portion 34, in which the positive electrode current collector 30 is exposed, is formed, and a positive electrode lead 19 is connected to the positive electrode exposed portion 34. The positive electrode exposed portion 34 is provided, for example, by intermittent coating in which the positive electrode mixture slurry is not applied to a part of the positive electrode current collector 30. A plurality of positive electrode exposed portions 34 may be formed on the surface of the positive electrode 11.

In the present embodiment, the positive electrode exposed portion 34 is in contact with only one end 11a of opposite ends of the positive electrode 11 in the width direction, and does not extend to the other end 11b of the positive electrode 11 in the width direction. Thus, the positive electrode mixture layer 32 is present between the other end 11b of the positive electrode 11 in the width direction and the positive electrode exposed portion 34, thereby increasing the battery capacity of the secondary battery 10.

On the surface of the positive electrode 11, a protective tape 36 is affixed to cover the positive electrode exposed portion 34 and the positive electrode mixture layer 32 around the positive electrode exposed portion 34. Specifically, the entire surface of the positive electrode exposed portion 34, the positive electrode lead 19, and a portion of the positive electrode mixture layer 32 adjacent to the positive electrode exposed portion 34 are covered with the protective tape 36. The protective tape 36 is an insulating member that prevents the positive electrode lead 19 and the positive electrode exposed portion 34 from short-circuiting with the opposing negative electrode mixture layer when the separator 13 is damaged.

The negative electrode 12 has a negative electrode current collector 40 and a negative electrode mixture layer 42 formed on the surface of the negative electrode current collector 40. For the negative electrode current collector 40, a foil of a metal stable within a potential range of the negative electrode, such as copper, a film in which such a metal is disposed on a surface layer thereof, and the like may be used.

The negative electrode mixture layer 42 includes, for example, a negative electrode active material and a binder. The content of the negative electrode active material in the negative electrode mixture layer 42 is, for example, greater than or equal to 80 mass% and less than or equal to 99 mass% relative to the total mass of the negative electrode mixture layer 42. The negative electrode 12 can be produced by, for example, applying a negative electrode mixture slurry including the negative electrode active material, the binder, and the like on the surfaces of the negative electrode current collector 40, drying the coating film, and then rolling the coating film by using a roller or the like. The negative electrode mixture layer 42 is preferably formed on both the surfaces of the negative electrode current collector 40.

The negative electrode active material included in the negative electrode mixture layer 42 is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead.

As the negative electrode active material, a metal that forms an alloy with Li, such as Si and Sn, a metal compound including Si, Sn, and the like, a lithium-titanium composite oxide, and the like may also be used. For example, a Si-containing compound represented by SiOₓ (0.5 ≤ x ≤ 1.6), a Si-containing compound in which fine particles of Si are dispersed in a lithium silicate phase represented by Li_{2y}SiO_{(2+y)} (0 < y < 2), or a Si-containing compound in which Si is dispersed in a carbon material may be used in combination with graphite.

Examples of the binder included in the negative electrode mixture layer 42 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used alone or may be used in combination with two or more thereof.

On the surface of the negative electrode 12, a negative electrode exposed portion 44, in which the negative electrode current collector 40 is exposed, is formed, and a negative electrode lead 20 is connected to the negative electrode exposed portion 44. The negative electrode exposed portion 44 is provided, for example, by intermittent coating in which the negative electrode mixture slurry is not applied to a part of the negative electrode current collector 40. In the example illustrated in FIG. 3, the negative electrode 12 has a negative electrode exposed portion 44 at the internal winding end in the longitudinal direction.

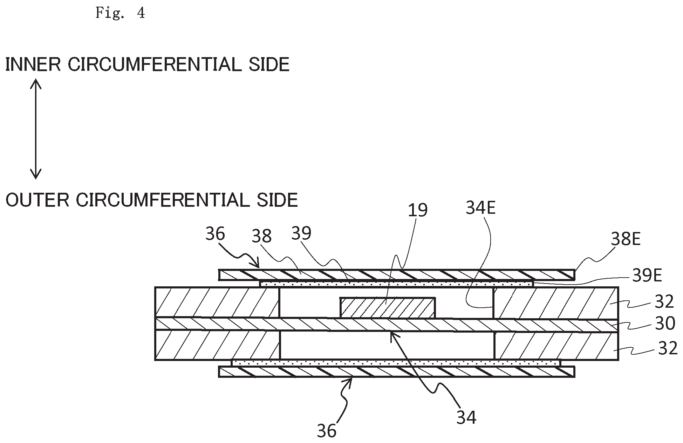

FIG. 4 is a sectional view taken along line A-A of FIG. 3. The positive electrode mixture layer 32 is formed on both surfaces of the positive electrode current collector 30, and the positive electrode exposed portion 34 is formed on both the surfaces of the positive electrode 11 to face each other with the positive electrode current collector 30 interposed therebetween. In the present embodiment, the positive electrode lead 19 is connected to the surface on the inner circumferential side of the positive electrode current collector 30. On both surfaces of the positive electrode 11 on the inner circumferential side and the outer circumferential side, the protective tape 36 is affixed to cover the positive electrode exposed portion 34. Note that the positive electrode lead 19 may be connected to the surface of the positive electrode current collector 30 on the outer circumferential side. The protective tape 36 described later may be affixed to only one of the surfaces of the positive electrode 11 on the inner circumferential side and the outer circumferential side. That is, a general protective tape may be affixed to the surface of the positive electrode 11 on either the inner circumferential side or the outer circumferential side. Since the electrode assembly 14 expands and contracts during charging and discharging, tensile stress is applied to the surface on the outer circumferential side, and therefore the protective tape 36 described later is preferably affixed to the surface of the positive electrode 11 on the outer circumferential side.

The protective tape 36 has a base material layer 38 and an adhesive layer 39 formed on one surface of the base material layer 38. A heat-resistant layer including, for example, inorganic particles such as metal oxides can be provided between the base material layer 38 and the adhesive layer 39. The base material layer 38 may be made of an insulating resin, and, for example, polyphenylene sulfide (PPS), polyether ether ketone (PEEK), polyimide (PI), polypropylene (PP), polyethylene terephthalate (PET), and polybutylene terephthalate (PBT) may be used. Among them, PI with relatively high hardness is preferred from the viewpoint of protecting the positive electrode exposed portion 34. The thickness of the base material layer 38 is, for example, greater than or equal to 5 µm and less than or equal to 50 µm.

The adhesive layer 39 is a portion for affixing the protective tape 36 to the positive electrode 11. The thickness of the adhesive layer 39 is, for example, greater than or equal to 1 µm and less than or equal to 30 µm. The adhesive layer 39 may include at least one of the group consisting of a rubber-based polymer and an acrylic-based polymer. Since the rubber-based polymer and the acrylic-based polymer have adhesiveness, the protective tape 36 can be adhered to the surface of the positive electrode 11. For example, a silicone-based polymer may be further added to the adhesive layer 39.

In the longitudinal direction of the positive electrode 11, an end 39E of the adhesive layer 39 is positioned more inside the protective tape 36 than an end 38E of the base material layer 38 and is positioned closer to the end 38E of the base material layer 38 than an end 34E of the positive electrode exposed portion 34. As a result of studies by the present inventors, it has been found that peeling or cracking of the positive electrode mixture layer 32 occurs in the vicinity of the end 39E of the adhesive layer 39, presumably due to tensile stress applied in the vicinity of the end 39E of the adhesive layer 39 when the electrode assembly 14 expands and contracts during charging and discharging. Since the above configuration ensures that vicinity of the end 39E of the adhesive layer 39 is covered with the base material layer 38, the risk of short-circuiting can be reduced even if peeling or cracking of the positive electrode mixture layer 32 occurs in the vicinity of the end 39E. In addition, since the length of the adhesive layer 39 in the longitudinal direction is shortened, the tensile stress applied to the positive electrode mixture layer 32 is reduced, thereby lowering the risk of peeling or cracking. Furthermore, since the adhesive layer 39 covers not only the entire surface of the positive electrode exposed portion 34 but also the surrounding positive electrode mixture layer 32, the risk of foreign matter entering the positive electrode exposed portion 34 can be reduced.

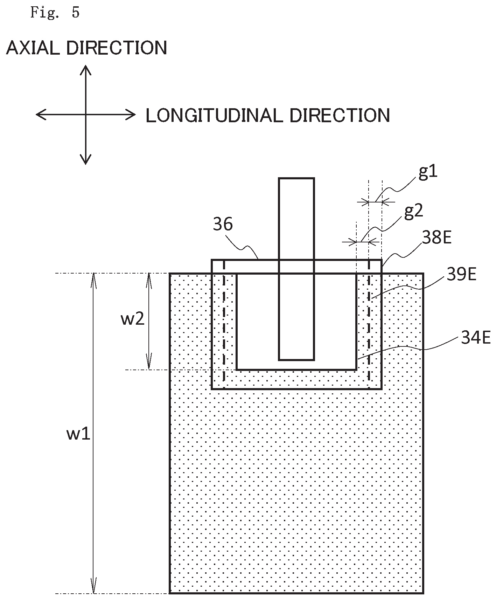

FIG. 5 is an enlarged view of a periphery of the positive electrode exposed portion 34 of FIG. 3. The distance g1 between an end 39E of the adhesive layer 39 and an end 38E of the base material layer 38 in the longitudinal direction of the positive electrode 11 is, for example, greater than or equal to 1 mm. The upper limit value of g1 is, for example, 10 mm. The distance g2 between the end 39E of the adhesive layer 39 and the end 34E of the positive electrode exposed portion 34 in the longitudinal direction of the positive electrode 11 is, for example, greater than or equal to 0.5 mm. The upper limit value of g2 is, for example, 10 mm.

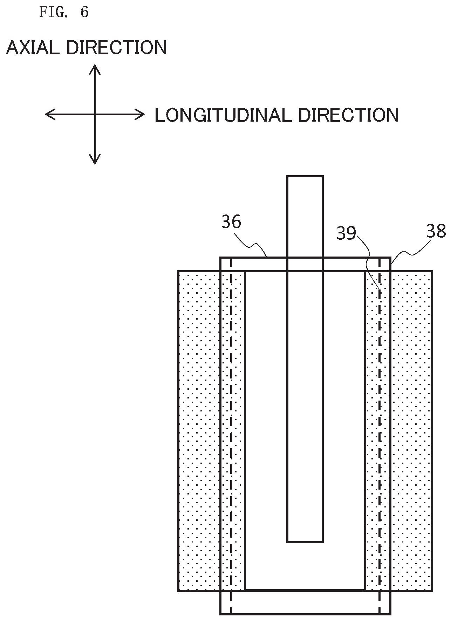

A ratio W2/W1 of the length W2 of the positive electrode exposed portion 34 in the width direction of the positive electrode 11 to the full length W1 of the positive electrode 11 in the width direction is, for example, greater than or equal to 5% and less than or equal to 50%. As in the example illustrated in FIG. 6, the positive electrode exposed portion 34 may extend from one end 11a to the other end 11b of the positive electrode 11 in the width direction. In this case as well, a protective tape 36 is affixed to cover the entire surface of the positive electrode exposed portion 34, the positive electrode lead 19, and a portion of the positive electrode mixture layer 32 adjacent to the positive electrode exposed portion 34.

As described above, according to the non-aqueous electrolyte secondary battery of the present disclosure, it is possible to reduce the risk of short-circuiting even if peeling or cracking occurs in the positive electrode mixture layer starting from the vicinity of the end of the adhesive layer of the protective tape.

The present disclosure will be further described with the following embodiments.

### Constitution 1:

A non-aqueous electrolyte secondary battery, comprising:
an electrode assembly in which a first electrode and a second electrode, each formed in a band shape and having different polarities, are wound in a longitudinal direction via a separator; and
an outer case that houses the electrode assembly, wherein
the first electrode has a current collector and a mixture layer formed on a surface of the current collector,
on the surface of the first electrode, an exposed portion where the current collector is exposed is formed, and a protective tape is affixed to cover the exposed portion and the mixture layer around the exposed portion,
the protective tape has a base material layer and an adhesive layer, and
in the longitudinal direction of the first electrode, an end of the adhesive layer is positioned more inside the protective tape than an end of the base material layer and is positioned closer to the end side of the base material layer than an end of the exposed portion.

### Constitution 2:

The non-aqueous electrolyte secondary battery according to Constitution 1, wherein a distance between an end of the adhesive layer and an end of the base material layer in the longitudinal direction of the first electrode is greater than or equal to 1 mm.

### Constitution 3:

The non-aqueous electrolyte secondary battery according to Constitution 1 or 2, wherein the exposed portion is in contact with only one end of opposite ends of the first electrode in a transverse direction.

### Constitution 4:

The non-aqueous electrolyte secondary battery according to any one of Constitutions 1 to 3, wherein the first electrode is a positive electrode.

### REFERENCE SIGNS LIST

10 Secondary battery, 11 Positive electrode, 11a One end 11b Other end 12 Negative electrode, 13 Separator, 14 Electrode assembly, 15 Outer case, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening portion, 27 Gasket, 28 Winding axis, 30 Positive electrode current collector, 32 Positive electrode mixture layer, 34 Positive electrode exposed portion, 36 Protective tape, 38 Base material layer, 39 Adhesive layer, 40 Negative electrode current collector, 42 Negative electrode mixture layer, 44 Negative electrode exposed portion

## Claims

1. A non-aqueous electrolyte secondary battery, comprising:
an electrode assembly in which a first electrode and a second electrode, each formed in a band shape and having different polarities, are wound in a longitudinal direction via a separator; and
an outer case that houses the electrode assembly, wherein
the first electrode has a current collector and a mixture layer formed on a surface of the current collector,
on the surface of the first electrode, an exposed portion where the current collector is exposed is formed, and a protective tape is affixed to cover the exposed portion and the mixture layer around the exposed portion,
the protective tape has a base material layer and an adhesive layer, and
in the longitudinal direction of the first electrode, an end of the adhesive layer is positioned more inside the protective tape than an end of the base material layer and is positioned closer to the end side of the base material layer than an end of the exposed portion.

2. The non-aqueous electrolyte secondary battery according to claim 1, wherein a distance between an end of the adhesive layer and an end of the base material layer in the longitudinal direction of the first electrode is greater than or equal to 1 mm.

3. The non-aqueous electrolyte secondary battery according to claim 1, wherein the exposed portion is in contact with only one end of opposite ends of the first electrode in a transverse direction.

4. The non-aqueous electrolyte secondary battery according to claim 1, wherein the first electrode is a positive electrode.
